# EUROPEAN PATENT APPLICATION

(11) **EP 2 034 645 A1**
(43) Date of publication of application: **11.03.2009**
(21) Application number: 07745206.8
(22) Date of filing: 13.06.2007
(51) Int. Cl.: H04J 11/00, H04J 1/00

(54) **TRANSMITTING DEVICE AND COMMUNICATION METHOD**

(30) Priority: 19.06.2006 JP 2006169443
(71) Applicant: NTT DoCoMo, Inc., Chiyoda-ku Tokyo 100-6150 (JP)
(72) Inventor: MIKI, Nobuhiko, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/061939
(87) International publication number: WO 2007/148588

(57) **Abstract**

A transmission apparatus which multiplexes control channels for multiple reception apparatuses into an OFDM symbol at the same timing in OFDM downlink radio access includes a pattern generating unit configured to generate a frequency mapping pattern which is specific to the transmission apparatus; and a frequency allocating unit configured to allocate subcarriers to the control channels for the multiple reception apparatuses according to the frequency mapping pattern.

## Description

### BACKGROUND OF THE INVENTION

### 1. Field of the Invention

The present invention relates to a technical field of radio communications. More specifically, the present invention relates to a transmission apparatus and a communication method used for a communication system in which multicarrier transmission is performed.

### 2. Description of the Related Art

In this technical field, it is becoming more and more important to realize wideband radio access for efficiently performing high speed and large capacity communications. As for downlink channels, a multicarrier scheme, more specifically an Orthogonal Frequency Division Multiplexing (OFDM) scheme, is considered promising from the viewpoint of performing high speed and large capacity communications while effectively suppressing multipath fading.

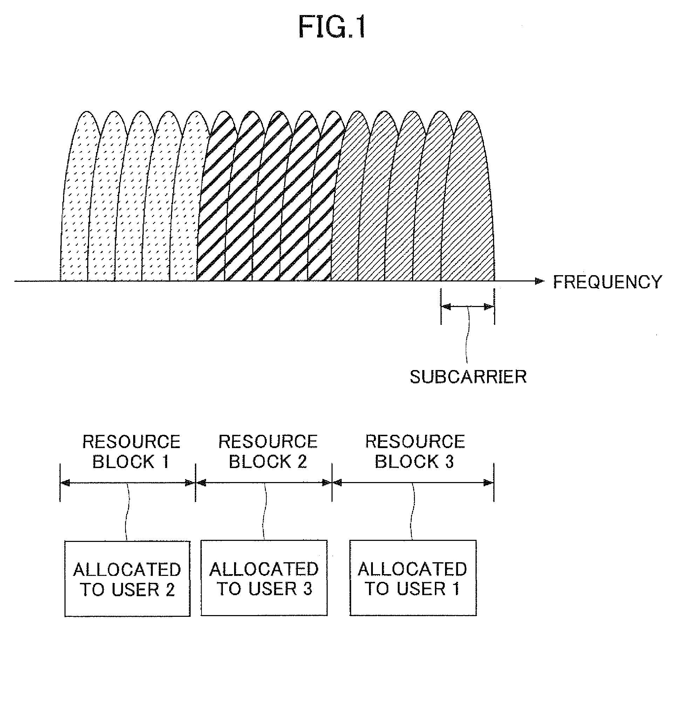

As shown in Fig. 1, a frequency bandwidth used in the system is divided into multiple resource blocks (divided into three resource blocks in Fig. 1), and each of the resource blocks includes one or more subcarriers. The resource block is also referred to as a frequency chunk or a frequency block. One or more resource blocks are allocated to a mobile station. The technology for dividing a frequency band into multiple resource blocks is described in P. Chow, J. Cioffi, J. Bingham, "A Practical Discrete Multitone Transceiver Loading Algorithm for Data Transmission over Spectrally Shaped Channel", IEEE Trans. Commun. vol. 43, No. 2/3/4, February/March/April 1995, for example.

### SUMMARY OF THE INVENTION

### [Problem(s) to be solved by the Invention]

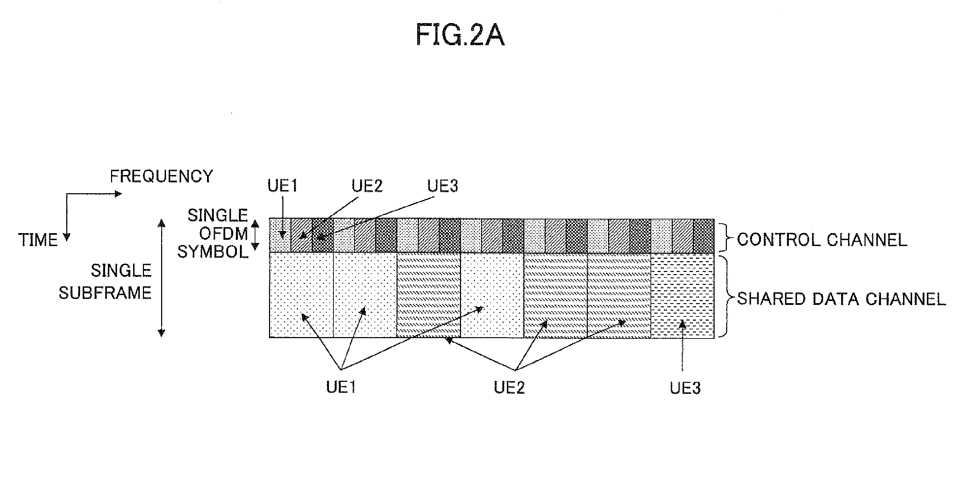

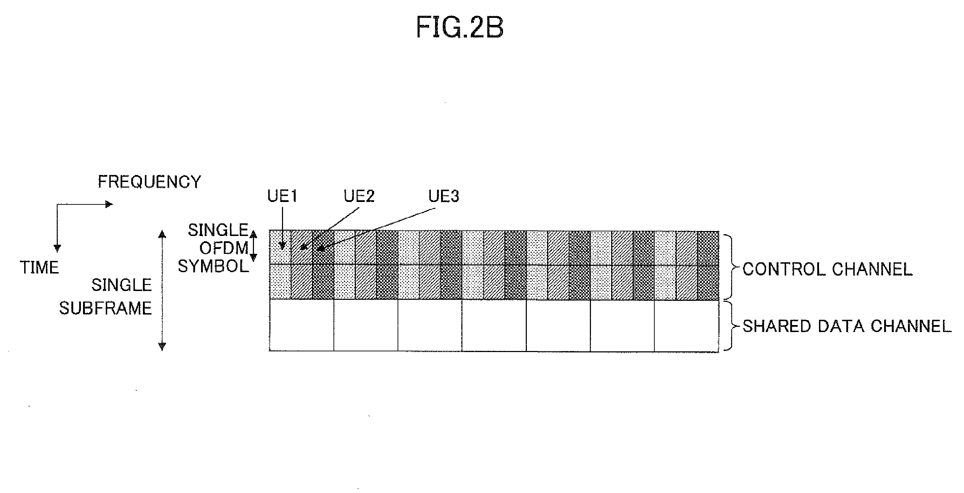

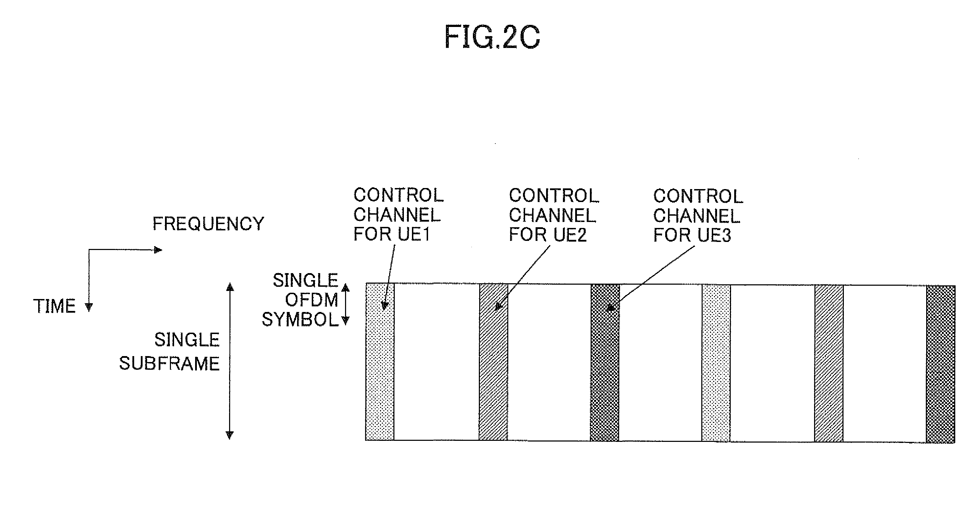

When a frequency bandwidth is divided into multiple resource blocks, multiple control channels (control signals) for multiple scheduled users can be multiplexed into a single subframe. Figs. 2A-2C show examples of multiplexing control channels for multiple users into a single subframe. Fig. 2A shows an example of multiplexing control channels for three users (DE1, UE2, and UE3) into a single OFDM symbol within the subframe. User data are placed (mapped) on shared data channels multiplexed into the subframe. Fig. 2B shows an example of multiplexing control channels for three users into two OFDM symbols within the subframe. Fig. 2C shows an example of multiplexing control channels for three users into the single subframe. To focus attention on control channels, shared data channels are not illustrated in Figs. 2B and 2C. As shown in Figs. 2A-2C, the present invention discusses the case where control channels for multiple users are placed within the subframe and these control channels are multiplexed into one or more OFDM symbols at the same timing.

Since the control channel includes information necessary for modulating the shared data channel, it is desired to improve reception quality on the control channel. However, when transmission power control or transmission beamforming is used, there is a problem in that control channels transmitted from neighboring base stations may cause interference and degrade reception quality on the control channel. Particularly, a mobile station situated at a cell edge may seriously have this problem.

In view of the aforementioned problem, it is a general object of the invention to improve reception quality on the control channel.

### [Means for solving the Problem]

In one aspect of the present invention, there is provided a transmission apparatus which multiplexes control channels for multiple reception apparatuses into an OFDM symbol at the same timing in OFDM downlink radio access, including:
a pattern generating unit configured to generate a frequency mapping pattern which is specific to the transmission apparatus; and
a frequency allocating unit configured to allocate subcarriers to the control channels for the multiple reception apparatuses according to the frequency mapping pattern.

In another aspect of the present invention, there is provided a communication method in which a transmission apparatus multiplexes control channels for multiple reception apparatuses into an OFDM symbol at the same timing in OFDM downlink radio access, including the steps of:
generating a frequency mapping pattern which is specific to the transmission apparatus;
allocating the control channels for the multiple reception apparatuses to subcarriers according to the frequency mapping pattern; and
controlling transmission power for the subcarriers.

### [Effect of the Invention]

According to an embodiment of the present invention, reception quality on the control channel can be improved.

### BRIEF DESCRIPTION OF THE DRAWINGS

Fig. 1 shows an example of dividing a frequency bandwidth into multiple resource blocks.
Fig. 2A shows a first example of multiplexing control channels for multiple users into a subframe.
Fig. 2B shows a second example of multiplexing control channels for multiple users into a subframe.
Fig. 2C shows a third example of multiplexing control channels for multiple users into a subframe.
Fig. 3 shows interference in the case where base stations perform transmission power control.
Fig. 4A shows a first example of FDM-based transmission power control.
Fig. 4B shows a second example of FDM-based transmission power control.
Fig. 4C shows a third example of FDM-based transmission power control.
Fig. 5 shows an example of CDM-based transmission power control.
Fig. 6 shows a combination of FDM-based transmission power control and CDM-based transmission power control.
Fig. 7 shows interference in the case where base stations perform transmission beamforming.
Fig. 8 shows a block diagram of a base station in accordance with a first or second embodiment.
Fig. 9 shows a flowchart of power control in the base station in accordance with the first or second embodiment.
Fig. 10 shows a block diagram of a mobile station in accordance with a first or second embodiment.
Fig. 11 shows an approach for achieving orthogonalization of control channels among sectors in the frequency domain.
Fig. 12 shows an approach for achieving orthogonalization of control channels among sectors in the code domain.
Fig. 13 shows an approach for using inter-sector FDM-based transmission power control and using CDM-based transmission power control within each sector.
Fig. 14 shows an approach for using inter-sector FDM-based transmission power control and using FDM-based transmission power control within each sector.
Fig. 15 shows an approach for using inter-sector CDM-based transmission power control and using CDM-based transmission power control within each sector.
Fig. 16 shows an approach for using inter-sector CDM-based transmission power control and using FDM-based transmission power control within each sector.

### DESCRIPTION OF THE PREFERRED EMBODIMENT

### [Description of Notations]

eNB1, eNB2 base station
UE1, UE2, UE3, UE4 mobile station
10 base station
101-1, 101-2 pattern generating unit/code multiplying unit
103-1, 103-2 frequency allocating unit
105-1, 105-2 power control unit
107 IFFT unit
109 CP adding unit
111 weight multiplying unit
113 transmission unit
20 mobile station
201 reception unit
203 CP removing unit
205 FFT unit
207 demultiplexing unit
209 pattern/code storing unit

### [Best Mode of Carrying Out the Invention]

With reference to the accompanying drawings, a description is given below with regard to preferred embodiments of the present invention.

### [First Embodiment]

In a first embodiment, a base station performs transmission power control of signals transmitted to mobile stations, when control channels are arranged as shown in Figs. 2A-2C. The transmission power control refers to changing transmission power of signals transmitted to mobile stations in order to improve reception quality at each mobile station.

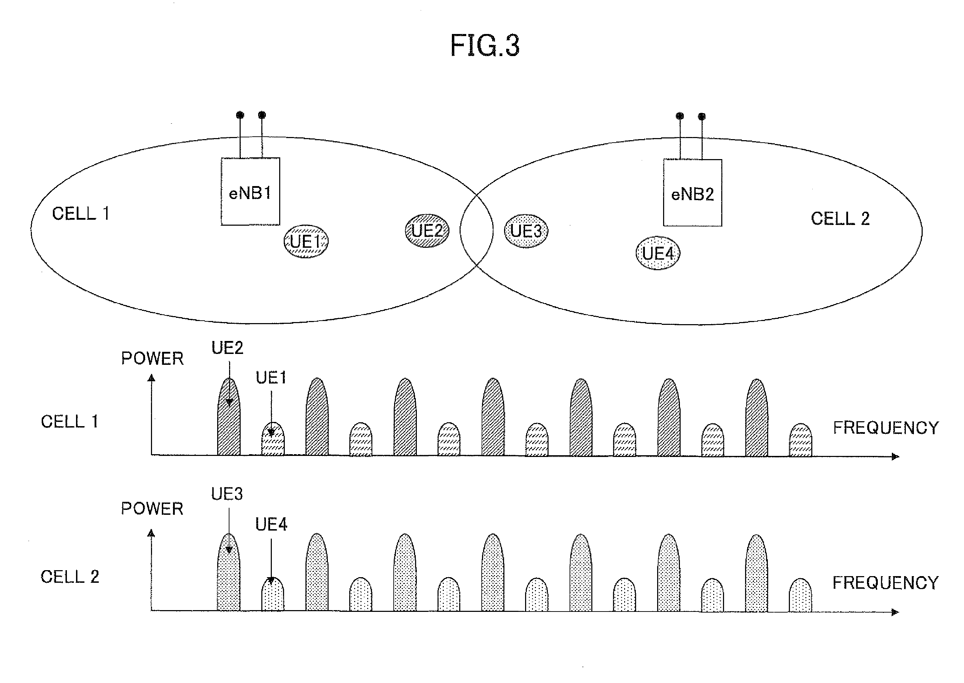

Fig. 3 shows transmission power on the frequency axis in the case where base stations perform transmission power control. The base stations are shown as eNB1 and eNB2 and mobile stations are shown as UE1-UE4. When the base station eNB1 performs transmission power control of signals transmitted to the mobile stations UE1 and UE2 which are situated within a cell 1 covered by the base station eNB1, the base station eNB1 decreases transmission power of signals transmitted to the mobile station UE1 which is situated close to the base station eNB1. In addition, the base station eNB1 increases transmission power of signals transmitted to the mobile station UE2 which is situated far from the base station eNB1. Similarly, when the base station eNB2 performs transmission power control, the base station eNB2 decreases transmission power of signals transmitted to the mobile station UE4 which is situated close to the base station eNB2. In addition, the base station eNB2 increases transmission power of signals transmitted to the mobile station UE3 which is situated far from the base station eNB2. As shown in Fig. 3, when subcarriers corresponding to a control channel transmitted from the base station eNB1 to the mobile station UE2 coincides with subcarriers corresponding to a control channel transmitted from the base station eNB2 to the mobile station UE3, the control channel for the mobile station UE2 interferes with the control channel for the mobile station UE3, and vice versa. Accordingly, the SIR (signal-to-interference ratio) cannot be improved, even though the base stations eNB1 and eNB2 increase transmission power.

In the first embodiment, each base station uses a frequency mapping pattern which is specific to the base station (cell), in order to solve this problem. This approach is referred to as FDM-based transmission power control. The base station uses the frequency mapping pattern determined in advance for each cell.

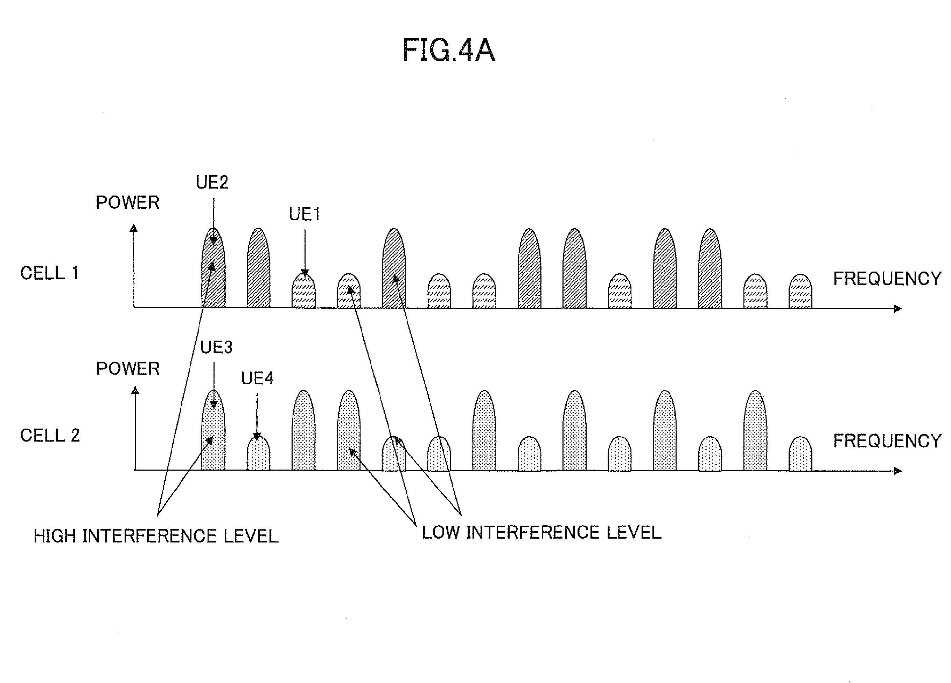

Specifically, each base station uses the frequency mapping pattern which is different from that of other base stations so as to randomize positions (subcarriers) where control channels for the respective mobile stations are placed (mapped), as shown in Fig. 4A. For example, the base station eNB1 covering the cell 1 allocates third, fourth, sixth, seventh, tenth, thirteenth, and fourteenth subcarriers to the mobile station UE1. Then, the base station eNB1 allocates the other subcarriers to the mobile station UE2. On the other hand, the base station eNB2 covering the cell 2 allocates first, third, fourth, seventh, ninth, eleventh, and thirteenth subcarriers to the mobile station UE3. Then, the base station eNB2 allocates the other subcarriers to the mobile station UE4. This allocation can make portions with a low interference level and portions with a high interference level and reduce interference among subcarriers.

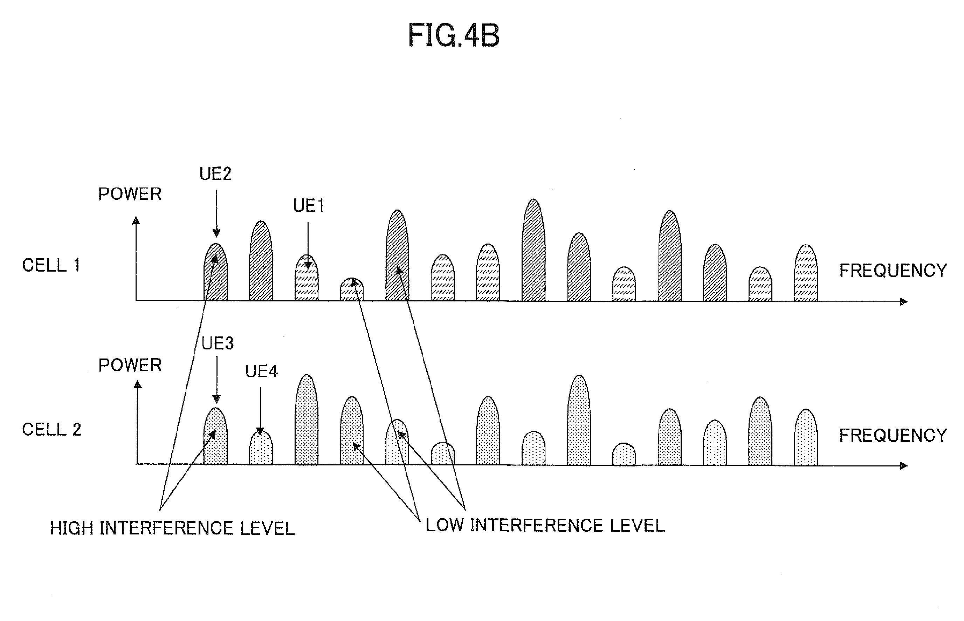

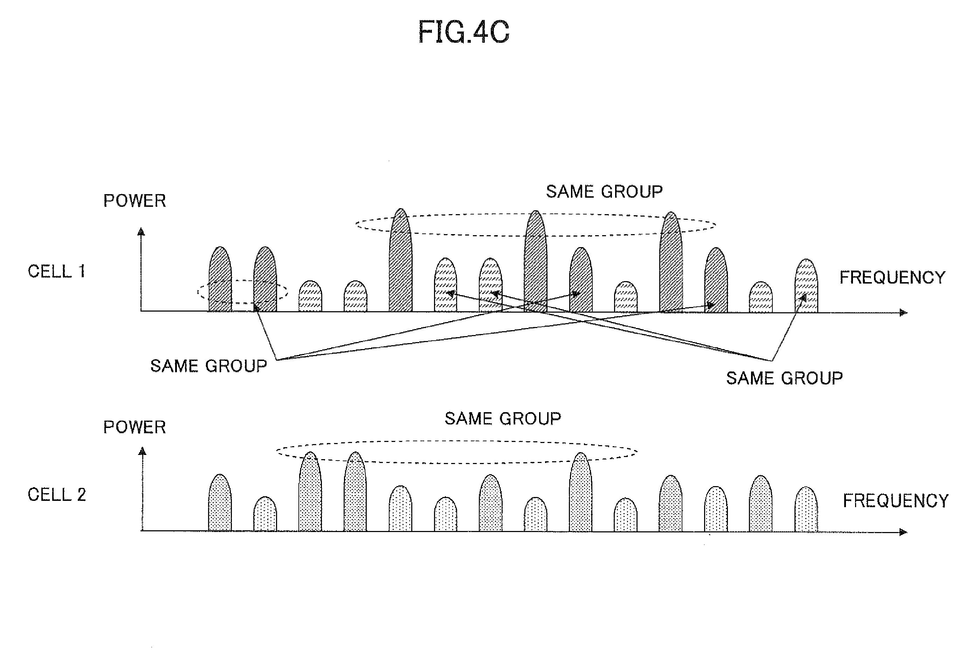

According to the FDM-based transmission power control shown in Fig. 4A, transmission power of signals transmitted to a mobile station is at the same level among subcarriers allocated to the mobile station. For example, transmission power of the signals transmitted to the mobile station UE1 is determined based on average reception quality (for example, SINR (signal-to-interference plus noise ratio)) on the system bandwidth for the mobile station UE1. Alternatively, transmission power may be determined for each subcarrier based on reception quality on each subcarrier, as shown in Fig. 4B. Controlling transmission power for each subcarrier can further reduce interference observed by the mobile station. Alternatively, the base station may group subcarriers into subcarrier groups based on reception quality on each subcarrier and determine transmission power for each subcarrier group based on average reception quality on each subcarrier group, as shown in Fig. 4C. Alternatively, the base station may group subcarriers into subcarrier groups within close ranges in the frequency domain and determine transmission power for each subcarrier group. In addition, the base station may combine the approach for grouping subcarriers into subcarrier groups based on reception quality with the approach for grouping subcarriers into subcarrier groups within close ranges in the frequency domain. In this manner, the subcarrier groups may be arranged in multiple levels.

Alternatively, the base station may multiply control channels for the respective mobile stations with orthogonal codes to achive orthogonalization among the mobile stations, instead of using the frequency mapping pattern which is specific to the base station. This approach is referred to as CDM-based transmission power control.

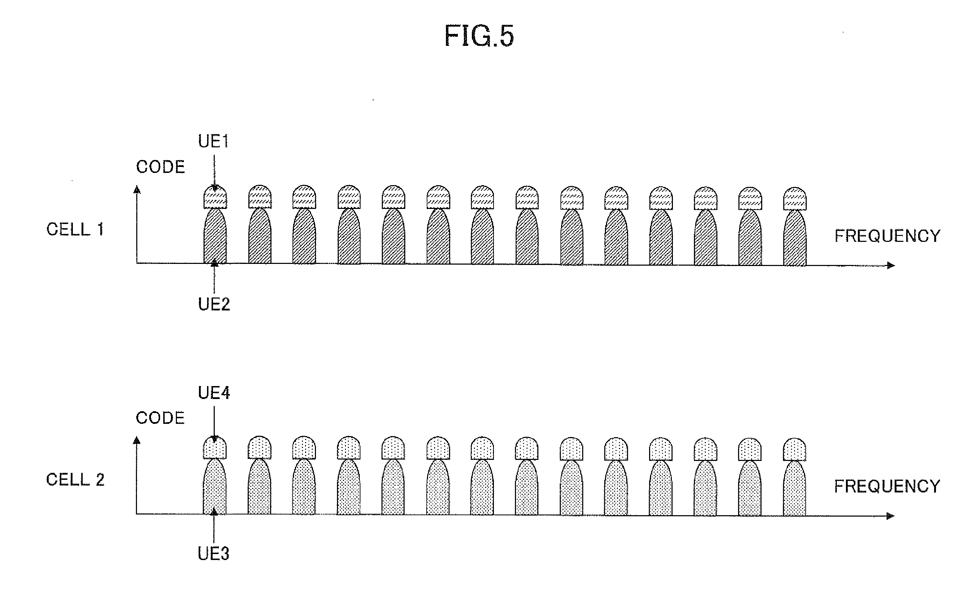

Specifically, the base station multiplies control channels for the respective mobile stations with orthogonal codes (Walsh codes, Phase shift codes, and the like) to achieve orthogonalization among mobile stations in the code domain, as shown in Fig. 5. According to this approach, transmission power of signals transmitted to each mobile station is at the same level among subcarriers. Therefore, this approach can reduce variations in transmission power (interference) among subcarriers.

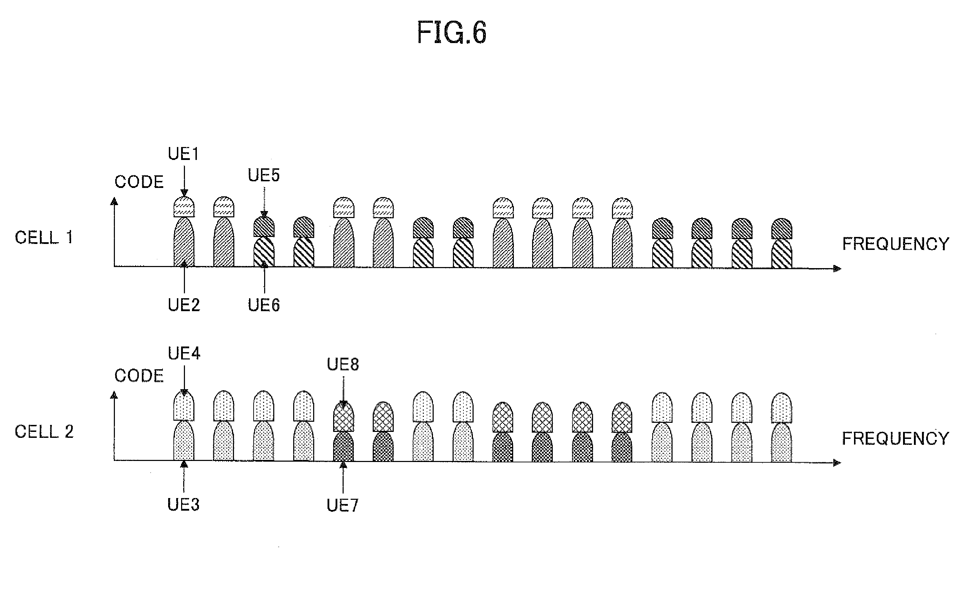

As shown in Fig. 6, FDM-based transmission power control and CDM-based transmission power control may be combined. It should be noted that Figs. 3-5 show multiplexed control channels for two mobile stations and Fig. 6 shows multiplexed control channels for four mobile stations.

CDM-based transmission power control has an advantage over FDM-based transmission power control to randomize interference. When control channels to be multiplexed increase in number, however, CDM-based transmission power needs a large spreading factor, and may not maintain orthogonality in the frequency selective fading environment. In other words, CDM-based transmission power has a disadvantage of being vulnerable to interference within the cell. On the other hand, FDM-based transmission power control is tolerant of interference within the cell, because signals among mobile stations do not interfere with each other in the frequency domain. When CDM-based transmission power control and FDM-based transmission power control are combined, interference can be reduced with a small spreading factor.

### [Second Embodiment]

In a second embodiment, a base station performs transmission beamforming of signals transmitted to mobile stations, when control channels are arranged as shown in Figs. 2A-2C. The transmission beamforming refers to changing antenna directivity in order to improve reception quality at each mobile station.

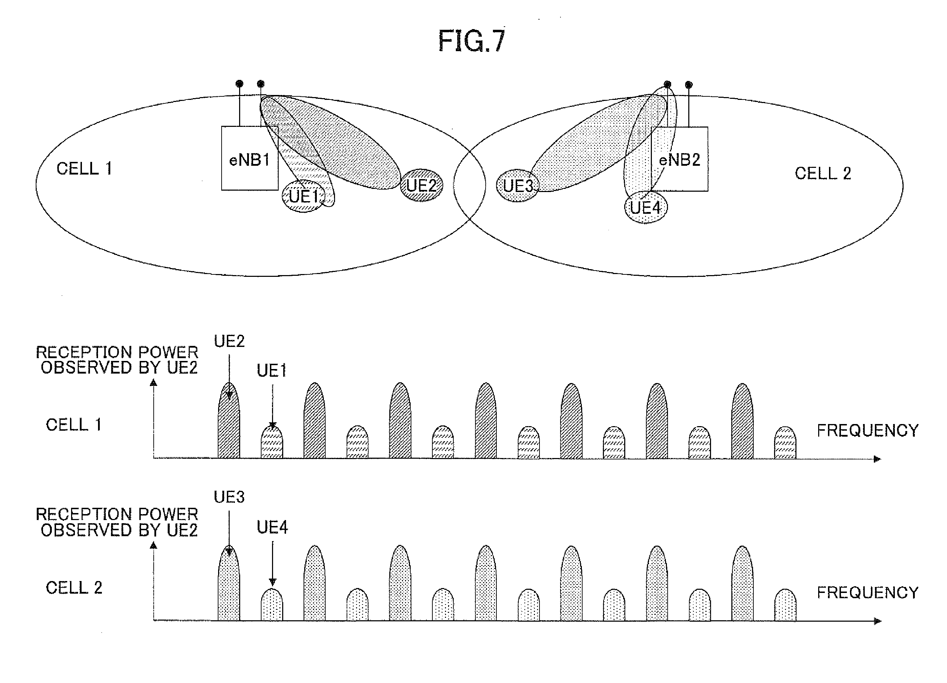

Fig. 7 shows reception power for control channels for respective mobile stations observed by a mobile station UE2 on the frequency axis in the case where base stations perform transmission beamforming. The base stations are shown as eNB1 and eNB2 and the mobile stations are shown as UE1-UE4. When the base station eNB1 performs transmission beamforming of signals transmitted to the mobile stations UE1 and UE2 which are situated within a cell 1 covered by the base station eNB1, the base station eNB1 changes antenna directivity so as to improve reception quality at the mobile station UE2 which is situated far from the base station eNB1. Similarly, when the base station eNB2 performs transmission beamforming, the base station eNB2 changes antenna directivity so as to improve reception quality at the mobile station UE3 which is situated far from the base station eNB2. As shown in Fig. 7, when subcarriers corresponding to a control channel transmitted from the base station eNB1 to the mobile station UE2 coincides with subcarriers corresponding to a control channel transmitted from the base station eNB2 to the mobile station UE3, the control channel for the mobile station UE2 interferes with the control channel for the mobile station UE3, and vice versa. Accordingly, the effect of transmission beamforming may be reduced.

In the second embodiment, similar to the first embodiment, each base station uses a frequency mapping pattern which is specific to the base station (cell), in order to solve this problem. This approach is referred to as FDM-based transmission beamforming. The use of the frequency mapping pattern which is specific to the base station can make portions with a low interference level and portions with a high interference level and reduce interference among subcarriers, as is the case with Fig. 4A. Alternatively, the base station may multiply control channels for the respective mobile stations with orthogonal codes. This approach is referred to as CDM-based transmission beamforming. This approach can reduce variations in interference among subcarriers, as is the case with Fig. 5. In addition, FDM-based transmission beamforming and CDM-based transmission beamforming may be combined.

### [Structures of Base Station and Mobile

### Station in accordance with First or Second Embodiment]

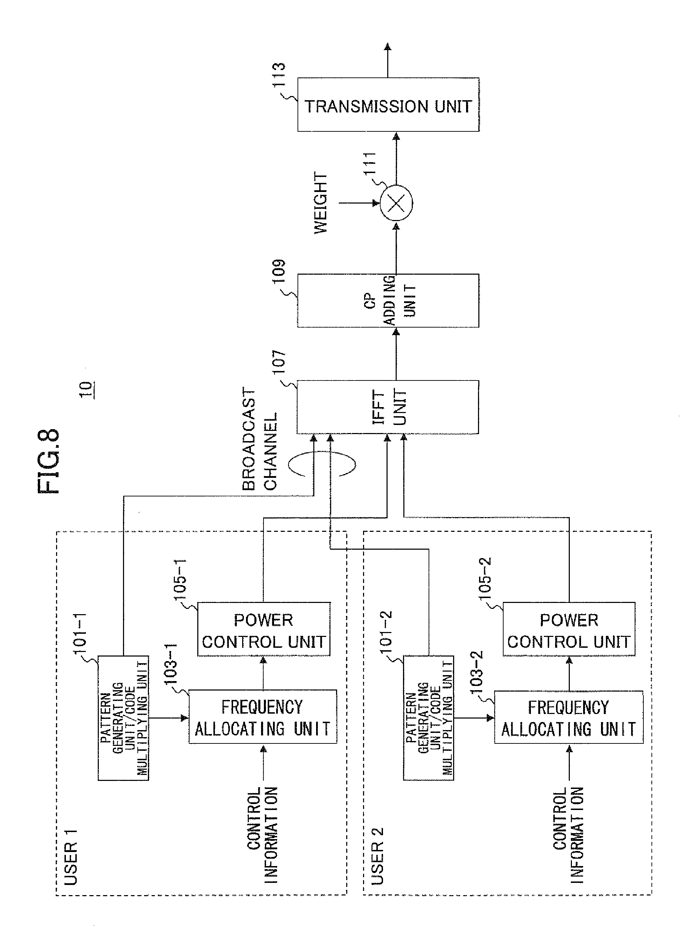

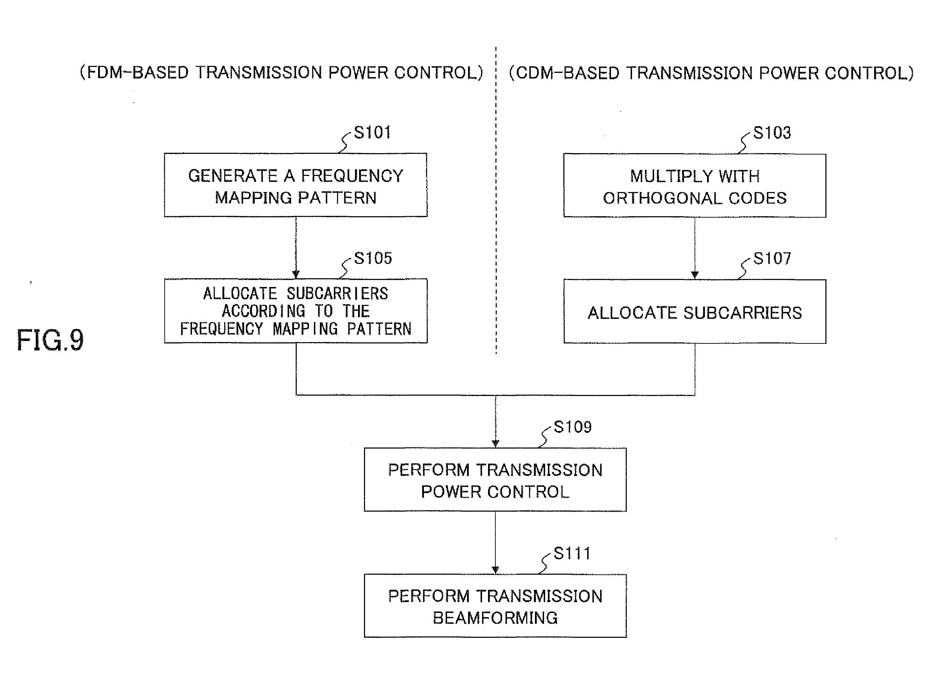

With reference to Figs. 8 and 9, a structure and an operation of a base station 10 are described below. The base station 10 includes pattern generating units/code multiplying units 101-1 and 101-2, frequency allocating units 103-1 and 103-2, power control units 105-1 and 105-2, an IFFT (Inverse Fast Fourier Transform) unit 107, a CP (Cyclic Prefix) adding unit 109, a weight multiplying unit 111, and a transmission unit 113. Although Fig. 8 shows the base station 10 including the two pattern generating units/code multiplying units 101-1 and 101-2, the two frequency allocating units 103-1 and 103-2, and the two power control units 105-1 and 105-2 for two mobile stations, the base station 10 may include N pattern generating units/code multiplying units 101, N frequency allocating units 103, and N power control units 105 for N mobile stations. Alternatively, the base station 10 may use a single pattern generating unit/code multiplying unit 101 and multiple frequency allocating units 103 for multiple mobile stations.

In the case of FDM-based transmission power control or FDM-based transmission beamforming, the pattern generating unit 101 generates a frequency mapping pattern which is specific to the base station (cell) (S101). Alternatively or in addition, in the case of CDM-based transmission power control or CDM-based transmission beamforming, the pattern generating unit/code multiplying unit 101 multiplies control channels for mobile stations with orthogonal codes to achieve orthogoonalization among the mobile stations (S103). In the case of FDM-based transmission power control or FDM-based transmission beamforming, the frequency allocating unit 103 allocates subcarriers according to the frequency mapping pattern (S105). In the case of CDM-based transmission power control or CDM-based transmission beamforming, the frequency allocating unit 103 may allocate subcarriers (frequencies) sequentially starting from the first mobile station 1, since the orthogonal codes are multiplied to achieve orthogonalization among the mobile stations (S107). The power control unit 105 controls transmission power based on reception quality at mobile stations (S109). Control channels for the respective mobile stations are multiplexed and transformed into orthogonal multicarrier signals by the IFFT unit 107. The CP adding unit 109 inserts CPs into the orthogonal muticarrier signals. The weight multiplying unit 111 multiplies the signals with a weight to change antenna directivity based on the positional relationship between the base station and the mobile stations (S111). The transmission unit 113 transmits the signal to the mobile stations.

Figs 8 and 9 show the base station 10 implementing both the first embodiment and the second embodiment. When the base station implements only the first embodiment, the base station 10 may not include the weight multiplying unit 111. When the base station implements only the second embodiment, the base may not include the power control unit 105.

In addition, the base station may notify the mobile stations of the frequency mapping pattern or the orthogonal codes generated by the pattern generating unit/code multiplying unit 101 on a broadcast channel.

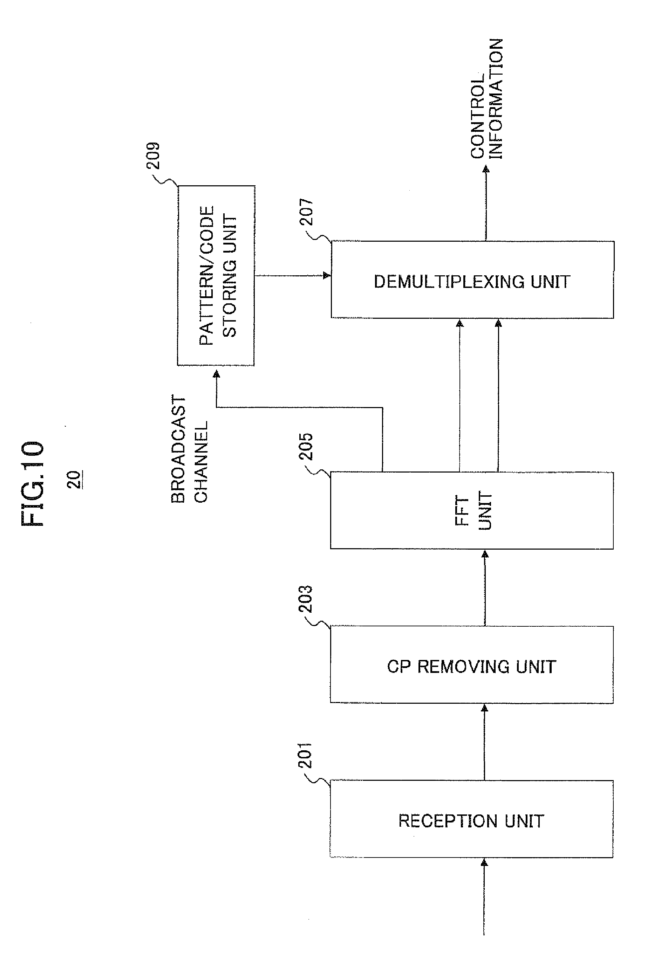

Fig. 10 shows a structure of a mobile station 20 which receives a control channel for the mobile station 20 using the frequency mapping pattern or the orthogonal codes received on the broadcast channel. The mobile station 20 includes a reception unit 201, a CP removing unit 203, an FFT unit 205, a demultiplexing unit 207, and a pattern/code storing unit 209. The CP removing unit 203 removes CPs from signals received by the reception unit 201, and then the FFT unit 205 transforms the signals into the frequency domain. The pattern/code storing unit 209 stores the frequency pattern or the orthogonal codes received on the broadcast channel. The demultiplexing unit 207 retrieves the control channel for the mobile station 20 using the frequency mapping pattern or the orthogonal codes.

### [Third Embodiment]

In a third embodiment, a base station orthogonalizes control channels among sectors, when the base station covers multiple sectors.

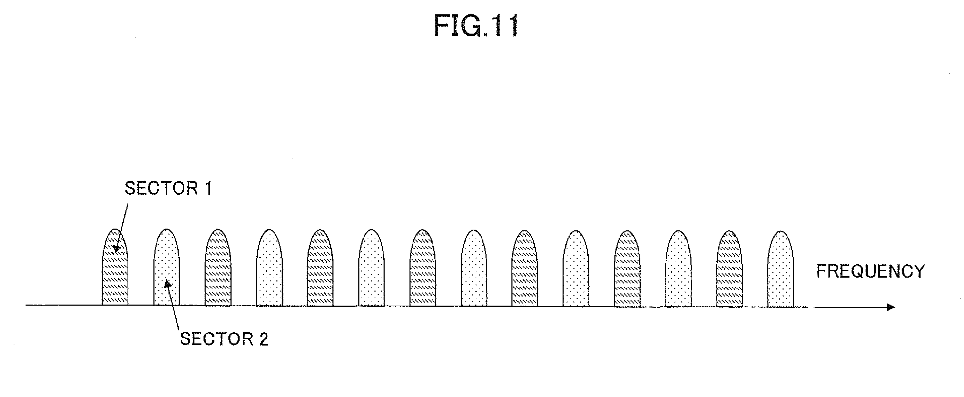

Fig. 11 shows a diagram in which control channels are orthogonalized among sectors in the frequency domain. This approach is referred to as inter-sector FDM-based transmission control. Allocating different subcarriers to control channels in the sectors can orthogonalize the control channels among the sectors. Specifically, when the frequency allocating unit (103 in Fig. 8) for a sector 1 allocates subcarriers to control channels, the frequency allocating unit (103 in Fig. 8) for a sector 2 does not allocate the same subcarriers to control channels. For example, the base station 10 may include a control unit for controlling the frequency allocating units in this manner among sectors. The control unit controls not to transmit control channels for the sector 2 on the subcarriers to which the control channels for the sector 1 are allocated.

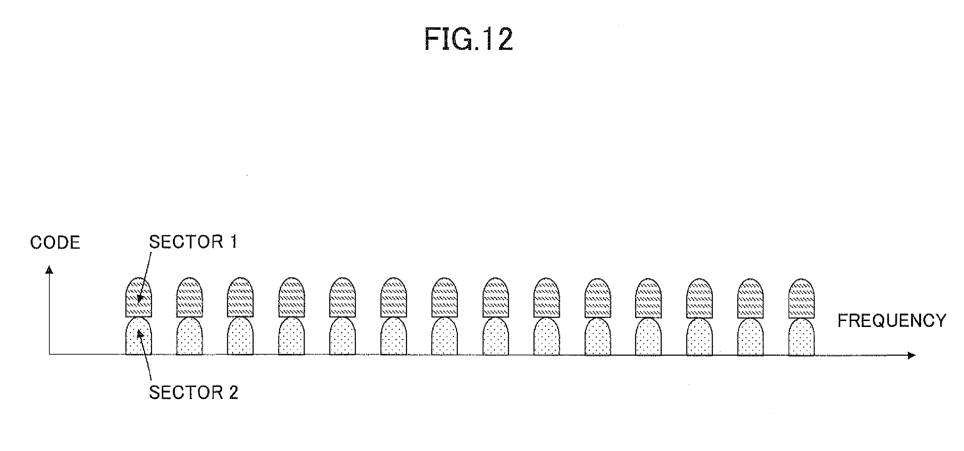

Fig. 12 shows a diagram in which control channels are orthogonalized among sectors in the code domain. This approach is referred to as inter-sector CDM-based transmission control. Using different orthogonal codes for control channels in the sectors can orthogonalize the control channels among the sectors. Specifically, when the code multiplying unit (101 in Fig. 8) for a sector 1 uses orthogonal codes, the code multiplying unit (101 in Fig. 8) for a sector 2 does not use the same orthogonal codes to control channels. For example, the base station 10 may include a control unit for controlling the code multiplying units in this manner among sectors. The control unit controls to orthogonalize between the control channels for the sector 1 and the control channels for the sector 2 in the code domain.

When transmission timings for control channels are synchronized among base stations, control channels can be orthogonalized among base stations, as is the case with Figs 11 and 12 which show control channels orthogonalized among sectors. GPS (Global Positioning System) may be used to synchronize control channels among base stations.

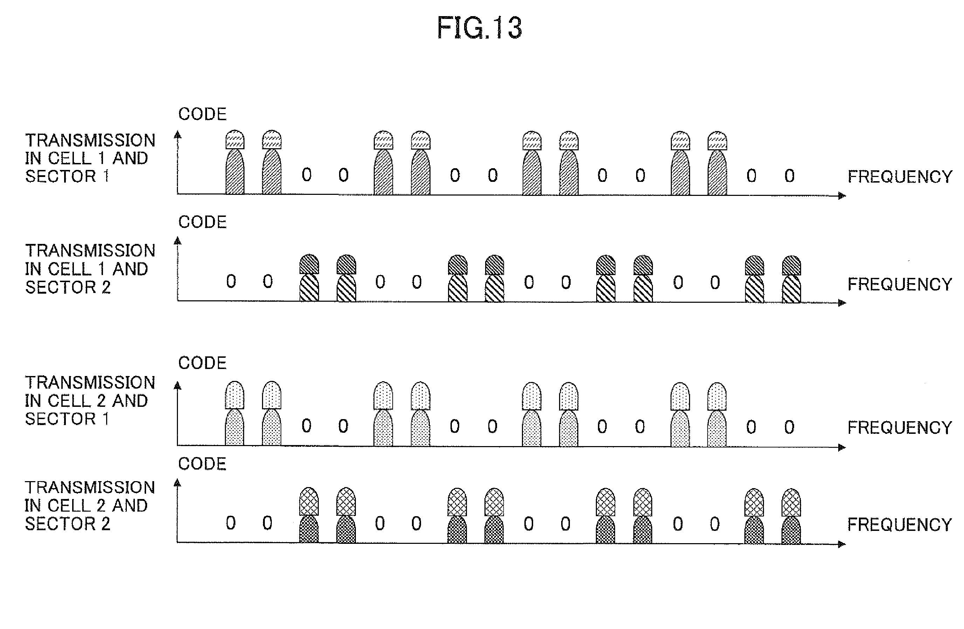

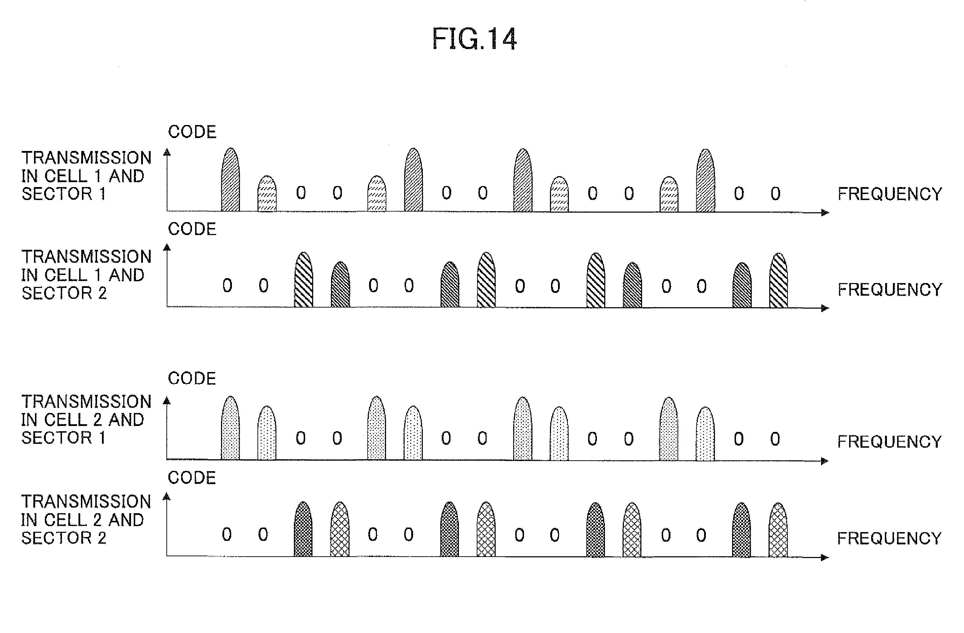

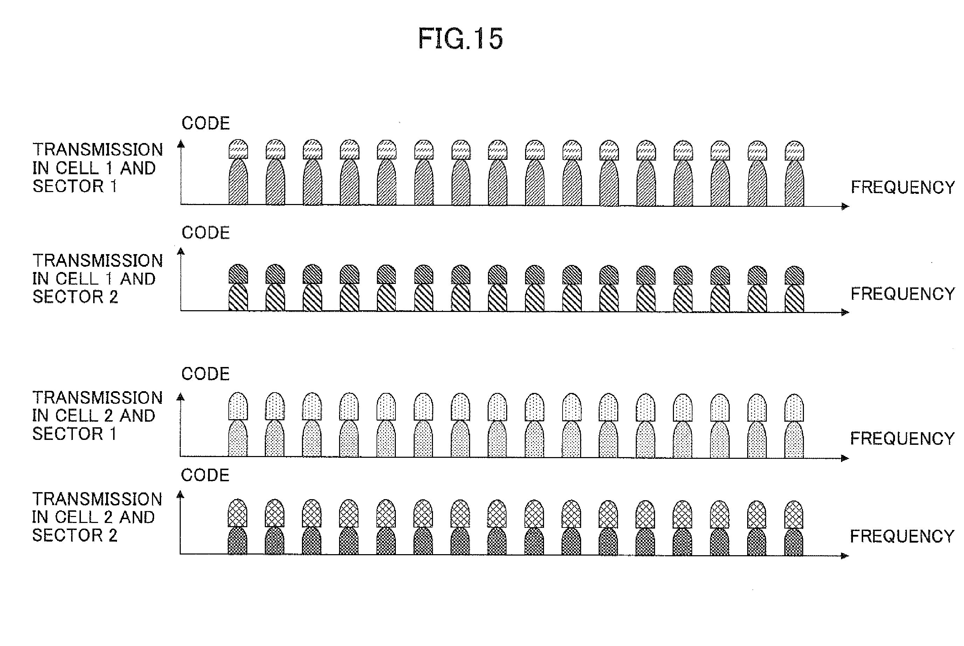

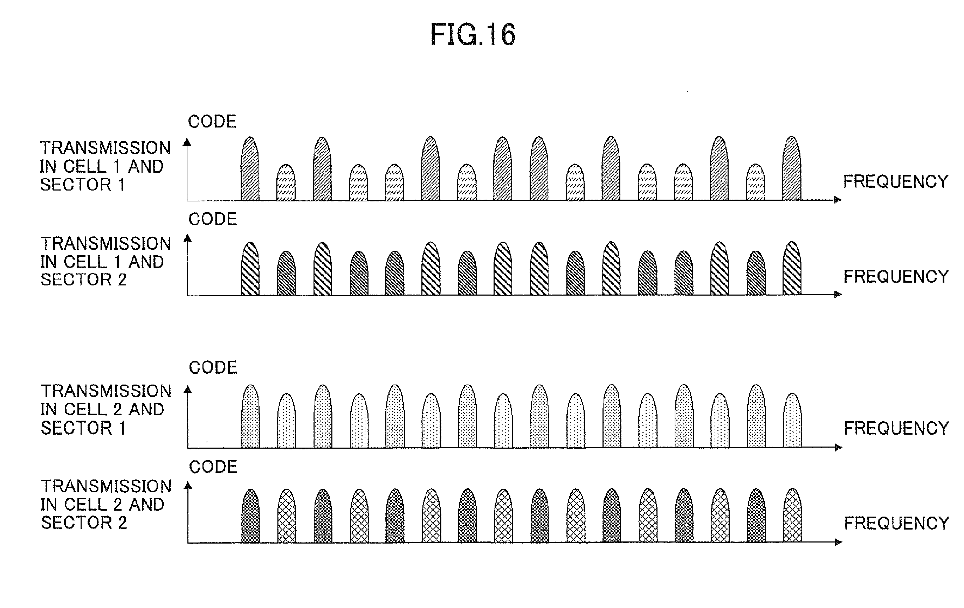

Figs. 13-16 show diagrams in which control channels for respective mobile stations are orthogonalized using the combination of the aforementioned approaches. Fig. 13 corresponds to the combination of inter-sector FDM-based transmission control among sectors and CDM-based transmission power control within each sector. Fig. 14 corresponds to the combination of inter-sector FDM-based transmission control among sectors and FDM-based transmission power control within each sector. Fig. 15 corresponds to the combination of inter-sector CDM-based transmission control among sectors and CDM-based transmission power control within each sector. Fig. 16 corresponds to the combination of inter-sector CDM-based transmission control among sectors and FDM-based transmission power control within each sector.

According to an embodiment of the present invention, interference among control channels can be reduced and reception quality on the control channel can be improved.

This international patent application is based on Japanese Priority Application No. 2006-169443 filed on June 19, 2006, the entire contents of which are incorporated herein by reference.

## Claims

1. A transmission apparatus which multiplexes control channels for multiple reception apparatuses into an OFDM symbol at the same timing in OFDM downlink radio access, comprising:
a pattern generating unit configured to generate a frequency mapping pattern which is specific to the transmission apparatus; and
a frequency allocating unit configured to allocate subcarriers to the control channels for the multiple reception apparatuses according to the frequency mapping pattern.

2. The transmission apparatus as claimed in Claim 1, further comprising:
a power control unit configured to control transmission power based on average reception quality on a system bandwidth for one of the reception apparatuses.

3. The transmission apparatus as claimed in Claim 1, further comprising:
a power control unit configured to control transmission power for each subcarrier based on reception quality on a corresponding subcarrier at one of the reception apparatuses.

4. The transmission apparatus as claimed in Claim 1, further comprising:
a power control unit configured to group the subcarriers into a predetermined number of subcarrier groups based on reception quality on a subcarrier allocated to one of the reception apparatuses and control transmission power for each subcarrier group.

5. The transmission apparatus as claimed in Claim 1, further comprising:
a code multiplying unit configured to multiply the control channels for the multiple reception apparatuses with orthogonal codes to achieve orthogonalization among the multiple reception apparatuses; wherein
the frequency allocating unit allocates the subcarriers to the control channels multiplied with the orthogonal codes according to the frequency mapping pattern.

6. The transmission apparatus as claimed in Claim 1, wherein:
the frequency mapping pattern is transmitted to the multiple reception apparatuses on a broadcast channel.

7. The transmission apparatus as claimed in Claim 5, wherein:
the orthogonal codes are transmitted to the multiple reception apparatuses on a broadcast channel.

8. The transmission apparatus as claimed in Claim 1, wherein:
the transmission apparatus is a base station covering multiple sectors; and
the frequency allocating unit distinguishes subcarriers used for control channels in each of the sectors.

9. The transmission apparatus as claimed in Claim 5, wherein:
the transmission apparatus is a base station covering multiple sectors; and
the code multiplying unit multiplies the control channels with orthogonal codes which are mutually different in each of the sectors.

10. A communication method in which a transmission apparatus multiplexes control channels for multiple reception apparatuses into an OFDM symbol at the same timing in OFDM downlink radio access, comprising the steps of:
generating a frequency mapping pattern which is specific to the transmission apparatus;
allocating the control channels for the multiple reception apparatuses to subcarriers according to the frequency mapping pattern; and
controlling transmission power for the subcarriers.
